# EUROPÄISCHE PATENTANMELDUNG

(11) **EP 2 428 309 A2**
(43) Veröffentlichungstag der Anmeldung: **14.03.2012**
(21) Anmeldenummer: 11180405.0
(22) Anmeldetag: 07.09.2011
(51) Int. Cl.: B23K 31/02

(54) **Fügekörper und Verfahren zur Herstellung eines derartigen Fügekörpers sowie integral beschaufelter Rotor**

(30) Priorität: 14.09.2010 DE 102010045331
(71) Anmelder: MTU Aero Engines GmbH, 80995 München (DE)
(72) Erfinder: Bamberg, Joachim, 85221 Dachau (DE); Satzger, Wilhelm, 80804 München (DE)

(57) **Zusammenfassung**

Offenbart ist ein Fügekörper, beispielsweise ein Adapter zum Verbinden einer Rotorschaufel mit einer Rotorscheibe bzw. einem Rotorring oder eine Rotorschaufel an sich eines Flugzeugtriebwerks, mit einem Grundkörper (4) und einer Fügefläche (26), wobei die Fügefläche von einer schmelzschweißbaren Beschichtung (6) aus einem verdichteten Pulver (24) gebildet wird, die formschlüssig mit einer Kontur des Grundkörpers verbunden ist, ein Verfahren zur Herstellung eines derartigen Fügekörpers, sowie ein integral beschaufelter Rotor.

## Beschreibung

Die Erfindung betrifft einen Fügekörper nach dem Oberbegriff des Patentanspruchs 1 und ein Verfahren zur Herstellung eines derartigen Fügekörpers.

Zur Herstellung eines BLISK bzw. eines BLING (Blade Integrated Disc bzw. Blade Integrated Ring) für Strömungsmaschinen wie Flugzeugtriebwerke sind verschiedene Fertigungsverfahren bekannt. So wird bei einem Verfahren der BLISK einstückig aus einer Scheibe durch spanabhebende Bearbeitung seiner Außenkontur zur Ausbildung von Schaufelprofilen hergestellt. Bei einem anderen Verfahren werden die Rotorschaufeln getrennt von der Scheibe hergestellt und durch lineares Reibschweißen am Außenumfang der Rotorscheibe angebunden.

Um die Haltbarkeit von Turbinen- bzw. Verdichterschaufeln zu erhöhen, werden zunehmend Schaufeln mit einer einkristallinen Struktur eingesetzt, da diese nahezu keine Korngrenzen oder andere Strukturfehler aufweisen. Allerdings ist beim Verbinden der einkristallinen Rotorschaufeln mit einer polykristallinen Rotorscheibe mittels Reibschweißens zu beachten, dass je nach der kristallografischen Orientierung der einkristallinen Materialstruktur eine andere Last erforderlich ist, um die einkristalline Materialstruktur in einen plastifizierfähigen Zustand zu bringen. Bezogen auf das Reibschweißverfahren bedeutet dies, dass sich das Schweißverhalten des einkristallinen Materials in Abhängigkeit von der kristallografischen Orientierung des einkristallinen Materials zur Schwingungs- und Druckrichtung ändert. Im ungünstigsten Fall kann die zum Reibschweißen erforderliche Last aufgrund der kristallografischen Orientierung des einkristallinen Materials so hoch sein, dass die Werkzeugmaschine bzw. der Werkzeugkopf beschädigt wird.

Zur Lösung dieses Problems schlägt die WO 2007/144557 A1 vor, eine Einkristallkomponente beim linearen Reibschweißen derart zu orientieren, dass eine Hauptgleitebene des Einkristalls zu einer Ebene ausgerichtet ist, die sowohl die Schwingungsrichtung als auch die Druckrichtung enthält, und dass sich eine Hauptgleitrichtung des Einkristalls innerhalb eines bestimmten Winkelbereichs bezüglich der Schwingungsrichtung erstreckt. Dieses Verfahren erlaubt zwar das direkte Verschweißen einer Rotorschaufel mit einer Rotorscheibe, jedoch ist das Verfahren auf längliche Geometrien beschränkt. Zudem werden durch dieses Verfahren nicht allgemeine Probleme des linearen Reibschweißens wie eine dünne, extrem glatte und gegebenenfalls spröde Diffusionszone sowie ein schneller Rissfortschritt beseitigt.

In dem deutschen Patent der Anmelderin DE 10 2008 039 113 B3 wird daher vorgeschlagen, zwischen einer monokristallinen Rotorschaufel und einer polykristallinen Rotorscheibe einen polykristallinen Adapter anzuordnen, der zuerst über Rotationsreibschweißen mit der Rotorschaufel verbunden wird. Nach Herstellung der Schaufel-Adapter-Anordnung wird der Adapter an der Rotorscheibe mittels eines Schmelzschweißverfahrens oder drgl. angebunden.

Der Adapter ist jedoch insbesondere im schaufelseitigen Anschlussbereich hohen Temperaturen und chemischen Angriffen ausgesetzt, so dass zumindest schaufelseitig eine einkristalline Materialstruktur zu bevorzugen ist.

Aufgabe der vorliegenden Erfindung ist es, einen Fügekörper, insbesondere zum Verschweißen mit einem schmelzschweißbaren Körperabschnitt eines Schweißpartners, der die vorgenannten Nachteile beseitigt und eine unabhängig von seinem Basismaterial schmelzschweißbare Fügefläche aufweist, ein Verfahren zur Herstellung eines derartigen Fügekörpers, sowie einen integral beschaufelten Rotor einer Strömungsmaschine, insbesondere eines Flugzeugtriebwerks, zu schaffen.

Diese Aufgabe wird gelöst durch einen Fügekörper mit den Merkmalen des Patentanspruchs 1, durch ein Verfahren mit den Schritten des Patentanspruchs 7 und durch einen integral beschaufelten Rotor mit den Merkmalen des Patentanspruchs 12.

Ein erfindungsgemäßer Fügekörper, insbesondere zum Verschweißen mit einem schmelzschweißbaren Schweißpartner, hat einen Grundkörper und eine Fügefläche. Erfindungsgemäß wird die Fügefläche von einer schmelzschweißbaren Beschichtung aus einem verdichteten Pulver gebildet, die formschlüssig mit einer Kontur des Grundkörpers verbunden ist. Hierdurch ist der Fügekörper im Bereich seiner Fügefläche schmelzschweißbar, unabhängig von dem Material seines Grundkörpers. Dabei wird durch die Kontur eine mechanische, intensive Verklammerung der Beschichtung mit dem Grundkörper erreicht, so dass die Beschichtung belastbar mit dem Grundkörper verbunden ist. Zudem bewirkt die Beschichtung, die einige Zentimeter dick sein kann, ein graduelles Aufweiten der Diffusionszone und damit einen graduellen, weichen Übergang der elastischen und bruchmechanischen Eigenschaften. Des Weiteren wird durch die Beschichtung ein Rissfortschritt in der Fügefläche bzw. im Fügebereich behindert, da sich dieser lediglich bis zur Kontur des Grundkörpers ausbreiten kann.

Je großflächiger die Kontur ist, desto stabiler wird grundsätzlich die Verklammerung der Beschichtung mit dem Grundkörper. Bei einem Ausführungsbeispiel wird es daher bevorzugt, wenn sich die Kontur großflächig über eine Oberfläche des Grundkörpers erstreckt.

Bevorzugterweise weist die Beschichtung eine Dicke auf, die einer Höhe der Kontur entspricht. Hierdurch durchsetzt die Kontur die Beschichtung über ihren gesamten Querschnitt, so dass ein Abscheren der Beschichtung bei einer Querbelastung verhindert wird.

Eine besonders intensive mechanische Verklammerung kann dadurch erreicht werden, dass die Kontur als eine fraktale Struktur ausgebildet ist. Bei einem bevorzugten Ausführungsbeispiel ist die Kontur als eine Koch-Kurve, beispielsweise nach der zweiten Iteration, ausgebildet.

Bei einem Ausführungsbeispiel ist der Fügekörper als ein Adapter zur Anbindung einer monokristallinen Rotorschaufel an eine polykristallinine Rotorscheibe ausgebildet ,wobei der Grundkörper aus einem monokristallinen Material und die Beschichtung aus einem polykristallinen, dem Rotorscheibenwerkstoff entsprechenden Material besteht.

Bei einem anderen Ausführungsbeispiel ist der Fügekörper als eine monokristalline Rotorschaufel zur Anbindung an einen polykristallinine Rotorscheibe ausgebildet,wobei der Grundkörper die Rotorschaufel bildet und die Beschichtung schaufelfußseitig aufgebracht ist. Hierdurch kann eine direkte schmelzschweißbasierte Anbindung der Rotorschaufel an die Rotorscheibe erfolgen, wodurch ein derartiger BLIKS bzw. BLING besonders belastbar ist.

Bei einem erfindungsgemäßen Verfahren zur Herstellung eines Fügekörpers wird zuerst ein Grundkörper bereitgestellt. Anschließend wird der Grundkörpers mit einer Kontur versehen. Danach wird der Grundkörper im Bereich der Kontur zur Bildung eines Pulverbeckens eingerahmt. Dann wird das Pulverbecken mit einem polykritstallinen Pulver befüllt, wobei dieses solange in das Pulverbecken gegeben wird, bis die Kontur vollständig von dem Pulver bedeckt ist. Anschließend wird das Pulver unter Druck und Temperatur zur Bildung einer mit der Kontur formschlüssig verbundenen Beschichtung verdichtet. Nach der Verdichtung wird der Grundkörper bzw. die Kontur entformt und, wenn notwendig der Fügekörper endbearbeitet. Das erfindungsgemäße Verfahren erlaubt die Herstellung eines Fügekörpers aus zwei unterschiedlichen Materialien, die jeweils einen mit einem Verbindungspartner verbindbaren Körperabschnitt bilden und sicher mittels mechanischer Verklammerung miteinander verbunden sind. Die mechanische Verklammerung ist dabei derart intensiv, dass der Fügekörper im Bereich seines Grundkörpers und seiner Beschichtung mittels eines Schweiß- und Lötverfahren mit einem Schweißpartner verbunden werden kann.

Bei einem fertigungstechnisch einfachen Verfahren ist der Grundkörper ein Guss-, Schmiede oder gesinterter metallischer Körper, in den durch partielles Absenken einer Oberfläche der Grundkörpers die Kontur mechanisch eingebracht wird. Dies kann beispielsweise über eine spanabhebende Bearbeitung wie Fräsen, Schleifen, Bohren und drgl. erfolgen.

Bei einem anderen Ausführungsbeispiel wird die Kontur thermisch beispielsweise mittels Drahterosion und/oder elektrochemischer Bearbeitung (ECM bzw. PECM) in eine Oberfläche des Grundkörpers eingebracht.

Bei einem bevorzugten Ausführungsbeispiel wird eine Oberfläche des Grundkörpers nicht abschnittsweise abgesenkt, sondern abschnittsweise mit Erhebungen versehen. Hierzu wird der Grundkörper mit einer integralen Kontur generativ bzw. durch ein generatives Fertigungsverfahren wie selektives Lasersintern oder selektives Laserschmelzen hergestellt. Hierdurch kann die Kontur nahezu beliebige geometrische Formen aufweisen, so dass selbst hochkomplexe fraktale Strukturen als Kontur abgebildet werden können. Zudem werden bei der Ausbildung der Kontur keine zusätzlichen Spannungen bzw. Materialänderungen in den Grundkörper eingebracht.

Bei einem Verfahren wird das Pulver durch heißisostatisches Pressen mit dem Grundkörper verbunden, wodurch die Beschichtung isotrope Eigenschaften erhält und eine besonders hochverdichtete und somit intensive Verklammerung der Beschichtung mit der Kontur erfolgt.

Ein erfindungsgemäßer integral beschaufelter Rotor einer Strömungsmaschine, insbesondere eines Flugzeugtriebwerks, hat eine Vielzahl von Laufschaufeln, die jeweils mittels eines erfindungsgemäßen Fügekörpers am Rotoraußenumfang angebunden sind, wobei der Grundkörper laufschaufelseitig und die Beschichtung rotorseitig angeordnet ist. Ein derartiger Rotor ist insbesondere hochbelastbar, da aufgrund der Fügekörper eine hervorragende Anbindung der Lauschaufeln an den Rotor erfolgt.

Sonstige vorteilhafte Ausführungsbeispiele der Erfindung sind Gegenstand weiterer Unteransprüche.

Im Folgenden wird ein bevorzugtes Ausführungsbeispiel der Erfindung anhand schematischer Darstellungen näher erläutert. Es zeigen:
Figur leine perspektivische Darstellung eines erfindungsgemäßen Fügekörpers,
Figur 2 ein perspektive Darstellung einer bevorzugten Kontur des in Figur 1 gezeigten Fügekörpers, und
Figuren 3, 4 und 5 Verfahrensschritte zur Herstellung des in Figur 1 gezeigten Fügekörpers.

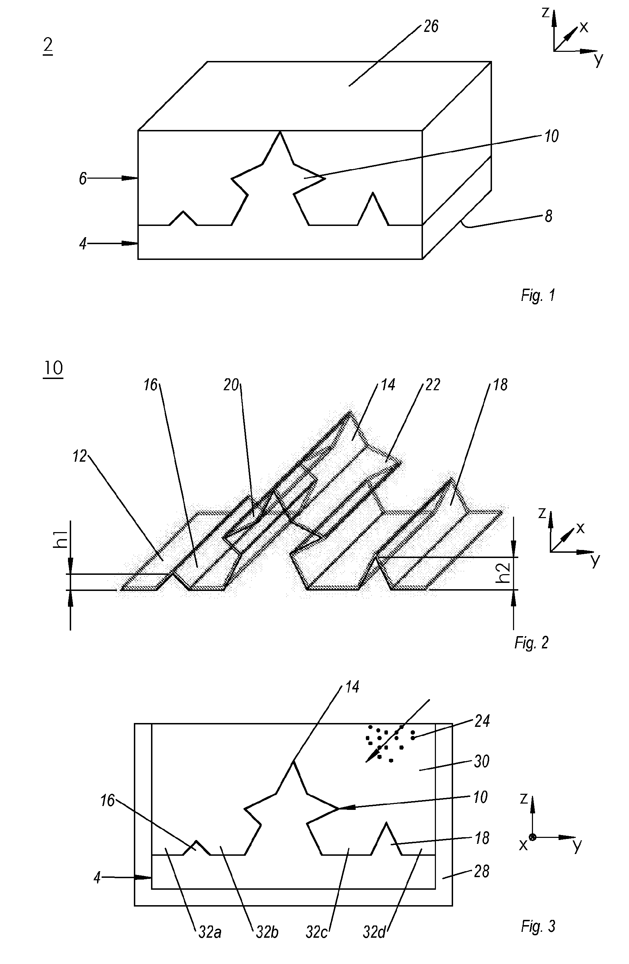

Ein erfindungsgemäßer Fügekörper 2, beispielsweise ein Adapter zur Anbindung einer monokristallinen Rotorschaufel an eine polykristalline Rotorscheibe bzw. zur Bildung eines integral beschaufelten Rotors einer Strömungsmaschine wie ein Flugzeugtriebwerk, hat wie in Figur 1 gezeigt, eine quaderartige Gestalt und weist einen Grundkörper 4 und eine vorrangig über Formschluss mit dem Grundkörper 4 verbundene Beschichtung 6 auf.

Der Grundkörper 4 besteht aus einem metallischen monokristallinen Material und dient zur Anbindung des Adapters 2 an die Rotorschaufel, beispielsweise mittels eines Rotationsschweißverfahrens im Bereich einer von der Beschichtung 4 abgewandten Außenfläche 8. Er weist zur Bildung des Formschlusses mit der Beschichtung 6 eine integrale Kontur 10 mit einer fraktalen Struktur auf.

Die Kontur 10 erstreckt sich gemäß Figur 2 in Längsrichtung x und Querrichtung y einer von der Außenfläche 8 abgewandten Oberfläche 12 des Grundkörpers 4. Sie ist vorzugsweise eine Koch-Kurve nach einer zweiten Iteration mit einer zentrale dreieckförmigen Erhebung 14, die von zwei dreieckförmigen Erhebungen 16, 18 seitlich flankiert wird. Die zentrale Erhebung 14 weist an ihren Flanken zwei dreieckige Vorsprünge 20, 22 auf, unterhalb derer zwei nicht bezifferte Hinterschneidungen gebildet sind. Die seitlichen Erhebungen 16, 18 haben eine geringere Erstreckung in Hochrichtung z (Höhe) des Grundkörpers 4 als die zentrale Erhebung 14, wobei die gemäß der Darstellung in den Figuren linke Erhebung 14 (h1) kleiner als die rechte Erhebung 16 (h2) ausgeführt ist.

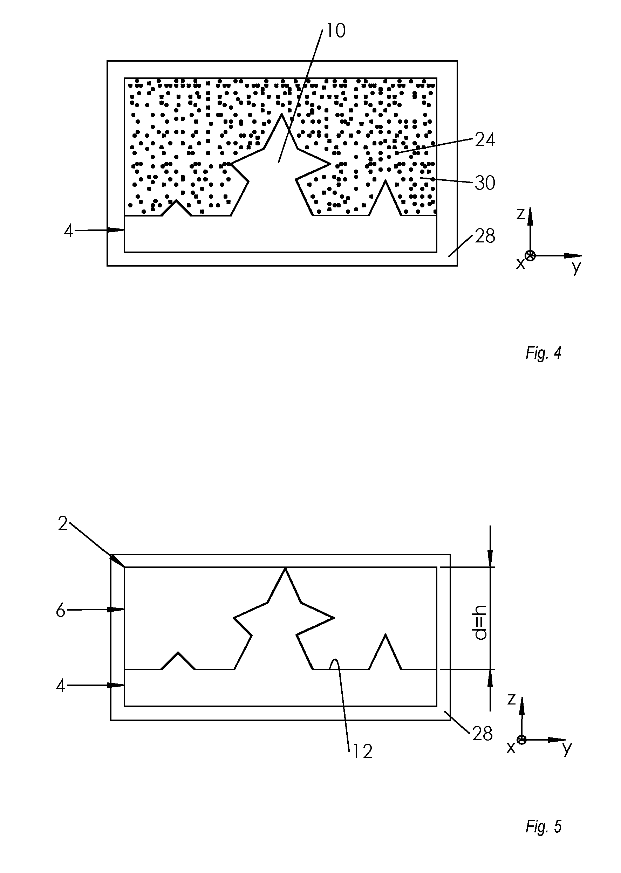

Die Beschichtung 6 besteht aus einem verdichteten Pulver 24 (s. Figur 4) aus einem metallischen polykristallinen Werkstoff und weist gemäß Figur 1 eine von der Außenfläche 8 abgewandte und in Richtung der Oberfläche 12 zeigende Fügefläche 26 zur Verbindung des Fügekörpers 2 mit der Rotorscheibe auf. Zur Erzielung einer optimalen Verbindung zwischen der Rotorscheibe und dem Adapter besteht das Pulver 24 aus dem gleichen schmelzschweißbaren Werkstoff wie die Rotorscheibe, beispielsweise Inconel 718.

Bei einem bevorzugten Verfahren zur Herstellung des Adapters 2 wird gemäß Figur 3 in einem ersten Schritt der Grundkörper 4 aus einem polykristallinen Material mit einer integralen Kontur 10 generativ hergestellt, die eine Vielzahl von Erhebungen 14, 16, 18 aufweist.

Dann wird in einem zweiten Schritt der Grundkörper 4 im Bereich seiner Kontur 10 von einer Einrahmung 28 eingefasst, die ein Pulverbecken 30 zur Aufnahme eines polykristallinen Pulvers 24 definiert. Danach wird das Pulver 24 in das Pulverbecken 30 eingefüllt, so dass Freiräume bzw. von der Kontur 10 nicht ausgefüllte Restvolumina 32a, 32b, 32c, 32d des Pulverbeckens 30 zwischen den Erhebungen 14, 16, 18 und zwischen den Erhebungen 16, 18 und der seitlichen Einrahmung 28 aufgefüllt sind. Die Auffüllung des Pulverbeckens 30 mit dem Pulver 24 erfolgt dabei derart, dass die Kontur 10 bzw. deren in Hochrichtung z betrachtet höchste Erhebung 14 mit dem Pulver 24 so bedeckt ist, dass nach einer Verdichtung des Pulvers 24 und einer Endbearbeitung des Adapters 2 die Fügefläche 26 in einem Abstand zur Oberfläche 12 angeordnet ist, der der Höhe der höchsten Erhebung 14 und somit der Höhe h der Kontur entspricht (s. Figur 5).

Dann wird in einem dritten Schritt gemäß Figur 4 das Pulverbecken 30 geschlossen bzw. der Grundkörper 4 und die Kontur 10 werden zusammen mit dem Pulver 24 eingekapselt und vollumfänglich verschlossen.

Danach wird in einem vierten Schritt gemäß Figur 5 das Pulver 24 unter Druck und Temperatur im Rahmen eines heißisostatischen Pressens verdichtet, bis das Pulver 24 eine homogene und isotrope belastbare Beschichtung 6 bildet, die über eine mechanische, intensive Verklammerung mit der Kontur 10 bzw. der die Kontur 10 bildenden Oberfläche 12 verbunden ist.

Abschließend wird in einem fünften Schritt der Adapter 2 entformt und der Adapter 2 auf seine Soll-Maße endbearbeitet. Nach der Endbearbeitung weist der Adapter 2 einen monokristallinen Grundkörper 4 mit einer polykristallinen Beschichtung 6 auf, die eine schmelzschweißbare Fügefläche 26 definiert. Die Dicke d der Beschichtung 6 entspricht dabei der Höhe h der Kontur 10. Der Adapter 2 kann nun bspw. mittels eines Rotationsreibschweißverfahrens mit einer Rotorschaufel und dann als Schaufel-Adapter-Anordnung im Bereich der Fügefläche 26 über ein Schmelzschweißverfahren an eine polykristalline Rotorscheibe gefügt werden.

Offenbart ist ein Fügekörper, beispielsweise ein Adapter zum Verbinden einer Rotorschaufel mit einer Rotorscheibe bzw. einem Rotorring oder eine Rotorschaufel an sich eines Flugzeugtriebwerks, mit einem Grundkörper und einer Fügefläche, wobei die Fügefläche von einer schmelzschweißbaren Beschichtung aus einem verdichteten Pulver gebildet wird, die formschlüssig mit einer Kontur des Grundkörpers verbunden ist, ein Verfahren zur Herstellung eines derartigen Fügekörpers, sowie ein integral beschaufelter Rotor.

## Patentansprüche

1. Fügekörper (2), insbesondere zum Verschweißen mit einem schmelzschweißbaren Schweißpartner, mit einem Grundkörper (4) und einer Fügefläche (26), **dadurch gekennzeichnet, dass** die Fügefläche (26) von einer schmelzschweißbaren Beschichtung (6) aus einem verdichteten Pulver (24) gebildet wird, die formschlüssig mit einer Kontur (10) des Grundkörpers (4) verbunden ist.

2. Fügekörper nach Anspruch 1, wobei sich die Kontur (10) großflächig über den Grundkörper (4) erstreckt.

3. Fügekörper nach Anspruch 2, wobei die Beschichtung (6) eine Dicke (d) aufweist, die einer Höhe (h) der Kontur (10) entspricht.

4. Fügekörper nach Anspruch 1, 2 oder 3, wobei die Kontur (10) eine fraktale Struktur aufweist.

5. Fügekörper nach einem der vorhergehenden Ansprüche, wobei dieser ein Adapter zur Anordnung zwischen einer Rotorschaufel und einem Rotorabschnitt ist.

6. Fügekörper nach einem der Ansprüche 1 bis 4, wobei dieser eine Rotorschaufel einer Strömungsmaschine ist.

7. Verfahren zur Herstellung eines Fügekörpers (2), mit den Schritten:
- Bereitstellen eines Grundkörpers (4),
- Versehen des Grundkörpers (4) mit einer Kontur (10),
- Einrahmen des Grundkörpers (4) zumindest im Bereich der Kontur (10) zur Bildung eines Pulverbeckens (30),
- Einfüllen eines metallischen Pulvers (24) in das Pulverbecken (30) zumindest bis die Kontur (10) von dem Pulver (24) bedeckt ist,
- Verdichten des Pulvers (24) unter Druck und Temperatur zur Bildung einer mit der Kontur (10) formschlüssig verbundenden Beschichtung (6), und
- Entformen des Fügekörpers (2).

8. Verfahren nach Anspruch 7, wobei die Kontur (10) mechanisch in den Grundkörper (4) eingebracht wird.

9. Verfahren nach Anspruch 7, wobei die Kontur (10) thermisch und/oder elektrochemisch in den Grundkörper (4) eingebracht wird.

10. Verfahren nach Anspruch 7, wobei die Kontur (10) generativ hergestellt wird.

11. Verfahren nach einem der Ansprüche 7 bis 10, wobei das Pulver (24) durch heißisostatisches Pressen mit dem Grundkörper (4) verbunden wird.

12. Integral beschaufelter Rotor einer Strömungsmaschine, insbesondere eines Flugzeugtriebwerks, mit einer Vielzahl von Laufschaufeln, die jeweils mittels eines Fügekörpers (2) nach einem der Ansprüche 1 bis 6 am Rotoraußenumfang angebunden sind, wobei der Grundkörper (4) laufschaufelseitig und die Beschichtung (6) rotorseitig angeordnet ist.
